# EUROPÄISCHE PATENTANMELDUNG

(11) **EP 4 036 051 A1**
(43) Veröffentlichungstag der Anmeldung: **03.08.2022**
(21) Anmeldenummer: 22151962.2
(22) Anmeldetag: 18.01.2022
(51) Int. Cl.: B66F 9/075

(54) **FLURFÖRDERZEUG MIT EINEM LASTRAHMEN**

(30) Priorität: 29.01.2021 DE 102021102061
(71) Anmelder: Jungheinrich Aktiengesellschaft, 22047 Hamburg (DE)
(72) Erfinder: Schüler, Michael, 24558 Wakendorf II (DE); LOHMANN, HELMUT, 27404 Gyhum (DE); Brunckhorst, Holger, 22844 Norderstedt (DE); Krenzin, Marcel, 24576 Bad Bramstedt (DE)
(74) Vertreter: Hauck Patentanwaltspartnerschaft mbB

(57) **Zusammenfassung**

Flurförderzeug, insbesondere Niederhub- oder Doppelstockfahrzeug, das ein Antriebsteil mit einem Antriebsrahmen und ein Lastteil mit einem Hubgestell aufweist, das einen Lastrahmen mit einem Lasttragmittel und mindestens einem Lagerkopf für einen Hubzylinder aufweist, wobei der Lastrahmen eine Platte aufweist, an der der mindestens eine Lagerkopf und das Lasttragmittel angebracht sind.

## Beschreibung

Die vorliegende Erfindung betrifft ein Flurförderzeug mit einem Lastrahmen, insbesondere einen Hubwagen für den Niederhub oder den Doppelstockhub.

Aus DE 10 2019 101 864 A1 ist ein Hubwagen mit einem Antriebsteil und einem an dem Antriebsteil gelagerten und relativ zu dem Antriebsteil um einen Initialhub höhenverstellbares Lastteil bekannt geworden. Ein Antriebsrahmen des Antriebsteils trägt Komponenten des Hubwagens. Das Lastteil besitzt einen Lastrahmen, der sich von dem Lastrahmen entlang einer Fahrzeuglängsachse forterstreckende Radarme aufweist. Die Radarme besitzen an ihrem freien Ende jeweils ein Rad zum Abstützen der Radarme und des Fahrzeugs. Eine einen Antrieb des Hubwagens versorgende Batterie ist in den Antriebsrahmen aufgenommen, wobei der Antriebsrahmen einen gegenüber dem Lastrahmen geschlossenen Aufnahmeraum aufweist, in welchen Komponenten des Antriebsteils angeordnet sind, wobei der Aufnahmeraum in den Lastrahmen hineinragt und den Initialhub des Lastteils nach oben begrenzt. Bei der bekannten Konstruktion wird die Batterie in den Antriebsrahmen aufgenommen, wodurch Raum in dem Lastrahmen frei wird für die Aufnahme von Komponenten aus dem Antriebsteil.

Aus DE 10 2011 015 936 A1 ist ein Flurförderzeug mit einem verschließbaren Batteriefach bekannt geworden. Das Batteriefach bildet einen kastenförmigen Teil des Lastrahmens, an dem die Radarme befestigt sind und der Hubzylinder angreift.

Bei heute bekannten Flurförderzeugen, insbesondere bei Hubwagen und besonders bei Geräten für den Niederhub oder den Doppelstockhub liegt ein typischer Grundaufbau vor, bei dem der Antriebsrahmen als Fahrwerks- und Komponententräger ausgebildet ist. Der kastenförmige Lastrahmen dient als Batterieaufnahme und als Lastenträger, bei Doppelstockgeräten ebenfalls als Träger für Teile des Hubgerüsts. Ein wichtiger Aspekt des bekannten Lastrahmens ist, dass er durch seine Rahmenbauweise mit wenig Materialeinsatz eine stabile Komponente für das Lastteil des Fahrzeugs schafft und mit dem Gewicht der Batterie zugleich die Fahrdynamik bestimmt.

Der Erfindung liegt die Aufgabe zugrunde, ein Flurförderzeug mit einem Lastrahmen bereitzustellen, der im Hinblick auf Gewicht und Kosten einen möglichst stabilen Lastrahmen zur Verfügung stellt.

Erfindungsgemäß wird die Aufgabe durch ein Flurförderzeug mit den Merkmalen aus Anspruch 1 gelöst. Vorteilhafte Ausgestaltungen bilden die Gegenstände der Unteransprüche.

Das erfindungsgemäße Flurförderzeug ist insbesondere als ein Hubwagen mit einem Niederhub oder einem Doppelstockhub ausgebildet. Das Flurförderzeug besitzt ein Antriebsteil mit einem Antriebsrahmen und ein Lastteil mit einem Hubgestell. Das Hubgestell besitzt einen Lastrahmen mit einem Lasttragmittel und einem Lagerkopf für einen Hubzylinder. Bei dem erfindungsgemäßen Fahrzeug wird der Lastrahmen über den Lagerkopf angehoben. Erfindungsgemäß weist der Lastrahmen eine massive Platte auf, an der Lagerkopf und Lasttragmittel angebracht sind. Die erfindungsgemäße Lösung sieht vor, dass der Lastrahmen ohne die bisher übliche Batteriekastenstruktur verwendet wird. Hierdurch wird der Lastrahmen in seinen Abmessungen deutlich kürzer. Durch die Verwendung einer massiven Platte, die bevorzugt eine vorbestimmte Mindestdicke besitzt, können die Anforderungen an Gewicht, Steifigkeit und geringe Kosten erfüllt werden. Aus Gründen der Stabilität und des Gewichts ist die Platte bevorzugt aus Metall, insbesondere aus Stahl hergestellt.

In einer zweckmäßigen Weiterbildung des Flurförderzeugs ist eine Batterie für das Fahrzeug in dem Antriebsteil vorgesehen. Die Batterie kann in dem Antriebsteil beispielsweise mit dem Antriebsrahmen verbunden fest in das Flurförderzeug eingebaut sein und in diesem auch während der Ladevorgänge verbleiben.

In einer bevorzugten Ausgestaltung besteht das Lasttragmittel aus einem Paar von Radarmen, von denen jeder an seinem freien Ende eine über eine Druck-/Zugstange verstellbare Lastrolle für den Initialhub aufweist. Die Verwendung von Druck-/Zugstangen für den Initialhub ist hinlänglich im Stand der Technik bekannt. In der Regel wird die Hubbewegung des Hubzylinders über einen Umlenkhebel, in der Regel einen Dreipunkthebel, auf die Druck-/Zugstange der Lastgabel umgelenkt. Hierzu ist bevorzugt ein Lagerbock für j eden der Radarme vorgesehen, der an der Platte befestigt ist. Der Lagerbock lagert einerseits den Radarm und zugleich auch den Umlenkhebel, über den die Bewegung des Hubzylinders auf die Druck-/Zugstange der Lastgabel umgelenkt wird. Das Lasttragmittel kann allgemein jedes Aufnahmemittel für eine Last sein und kann beispielsweise auch aus einem Paar von Gabelzinken gebildet sein.

In einer bevorzugten Weiterbildung des erfindungsgemäßen Flurförderzeugs kann zwischen den Lagerböcken mindestens eine Aussteifungsplatte vorgesehen sein, über die Lagerböcke und Platte miteinander verbunden sind. In einer bevorzugten Ausgestaltung sind die Platte und die Aussteifungsplatte über eine Stoßnaht miteinander verbunden, wobei die Platte des Lastrahmens senkrecht auf der Aussteifungsplatte steht. Auch die Aussteifungsplatte kann beispielsweise über eine Stoßnaht mit den beiden Radarmen verbunden sein. Hierzu wird die Aussteifungsplatte zwischen den Radarmen angeordnet und entlang ihrem Stoß mit diesen beispielsweise durch Schweißen verbunden.

Ferner ist vorgesehen, dass der Lagerkopf für den Hubzylinder eine rechteckige Grundplatte aufweist, die flächig mit der Platte des Lastrahmens verbunden ist. Bevorzugt besitzt der Lagerkopf eine Aufnahme für den Hubzylinder, mit der die Kraft des Hubzylinders auf den Lastrahmen übertragen werden kann.

Für die vorbestimmte Dicke der Platte hat sich als besonders vorteilhaft eine Dicke von 15 mm bis 45 mm bei einem Niederhubfahrzeug und 20 mm bis 70 mm bei einem Doppelstockfahrzeug herausgestellt. Mit diesen Dicken besitzt die Platte ausreichend Gewicht und Stabilität. Gerade auch durch diese Abmessungen ist in einem Bereich zwischen Lagerkopf und Lasttragmittel kein zusätzliches Verstärkungs- oder Aussteifungsteil vorzusehen. Es hat sich auch herausgestellt, dass an der Platte überhaupt kein zusätzliches Verstärkungs- oder Aussteifungsteil erforderlich ist. Ein besonderer Vorteil der massiven Platte ist auch, dass das geringere Gewicht bei der Verwendung von Li-Ionen-Batterien kompensiert werden kann.

Bevorzugt ist auch vorgesehen, dass der mindestens eine Lagerkopf als Widerlager für einen Hubzylinder ausgebildet ist, wobei auch mehrere Lagerköpfe zum Einsatz kommen können, wenn das Fahrzeug mit mehreren Hubzylindern ausgestattet ist. Zwei bevorzugte Ausführungsformen der Erfindung werden nachfolgend anhand der Figuren näher erläutert. Es zeigen:
- Fig. 1: einen Lastrahmen mit zwei angesetzten Radarmen für ein Niederhubfahrzeug in einer perspektivischen Ansicht von schräg unten,
- Fig. 2: den Lastrahmen aus Fig. 1 in einer perspektivischen Ansicht von schräg oben,
- Fig. 3: einen Lastrahmen mit Radarmen und zusätzlichen Aussteifungsplatten in einer perspektivischen Ansicht von schräg oben und
- Fig. 4: den Lastrahmen aus Fig. 3 in einer perspektivischen Ansicht von schräg unten.

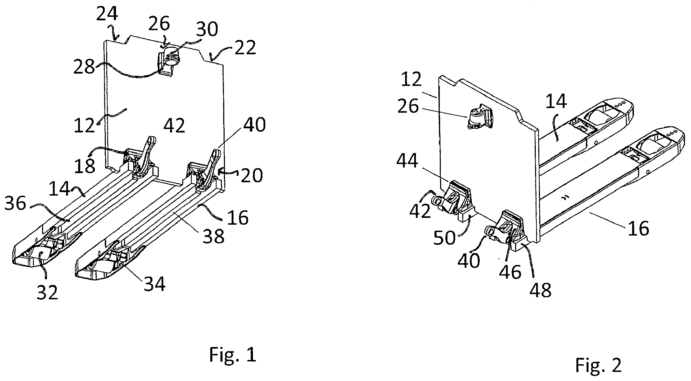

Fig. 1 zeigt einen Lastrahmen 10, der eine massive Platte 12 aus Metall besitzt. Die Metallplatte 12 wird auch als Monoplatte bezeichnet. Die Platte 12 besitzt im Wesentlichen eine rechteckige Grundform, wobei im Bereich der Radarme 14, 16 Ausnehmungen 18, 20 vorgesehen sind, die in Form und Lage die Radarme 14 und 16 teilweise aufnehmen können. Auch an der den Radarmen 14, 16 gegenüberliegenden Seite weist die Platte 12 im Bereich der Ecken Ausnehmungen 22, 24 auf.

Mittig im oberen Bereich ist ein Lagerkopf 26 mit der Platte 12 verbunden. Der Lagerkopf 26 besitzt einen mit der Platte 12 verbundenen Grundkörper 28 und eine daran angesetzte Lageraufnahme 30. Die Lageraufnahme 30 ist dazu ausgebildet, einen zum Heben und Senken des Lastrahmens vorgesehenen Hubzylinder (nicht dargestellt) aufzunehmen und so den gesamten Lastrahmen anzuheben. Die Radarme 14, 16 besitzen in an sich bekannter Weise Lastrollen 32, 34, die über Druck-/Zugstangen 36, 38 für einen Initialhub betätigt werden können. Die Druck-/Zugstangen 36, 38 werden jeweils über Dreipunkthebel 42, 40 betätigt. Die freien Hebelenden sind beispielsweise am Fahrzeugrahmen angelenkt, so dass bei einem Heben des Lastrahmens der Dreipunkthebel 40, 42 um einen festen Schwenkpunkt am Lastrahmen verschwenkt und mit seinem dritten Ende die Druck-/Zugstange 36, 38 betätigt.

Fig. 2 zeigt mit seiner geänderten perspektivischen Ansicht deutlich die Lagerböcke 44, 46, die die Verbindung der Radarme 14, 16 an der Platte 12 unterstützen. Die Lagerböcke 44, 46 besitzen eine prismenförmige Gestalt mit einem dreieckigen Querschnitt. Die Lagerböcke 44, 46 sitzen mit einem Schenkel flächig auf der Platte 12 und besitzen eine Aussparung, die dem Dreipunkthebel 42, 40 Freiraum lässt. An dem von der Platte 12 fortweisenden Ende besitzen die Lagerböcke die Lagerstelle für das mittlere Lager des Dreipunkthebels 42, 40. Die Radarme 14, 16 stehen mit einem Abschnitt 48, 50 über die Platte 12 vor, so dass der Lagerbock auf die vorstehenden Abschnitte 48, 50 aufsetzen kann. Die Verbindung von Lagerplatte und Radarmen sowie Lagerbock 44, 46 mit den Radarmen 14, 16 verleiht der Anbindung ausreichend Stabilität.

Bei der Erfindung erfolgt mit der Platte 12 der Ersatz der sonst üblichen Kastenstruktur im Lastrahmen. Selbst bei sehr schmal ausgestalteten Batterien bedeutet die Verwendung der Platte 12 eine Reduzierung der Fahrzeuglänge. Die Lagerböcke 44, 46 bilden zusammen mit der Platte 12 eine ausreichend lange und stabile Anbindung für die Radarme. Hinzu kommt, dass die Lagerböcke zusammen mit dem Lagerkopf 26 an der Platte ein Dreieck bilden, das eine Einleitung der Kräfte in die Platte ohne die Gefahr einer Verformung dieser sicherstellt. Weiterhin wird deutlich, dass neben der reduzierten Fahrzeuglänge die geringe Bauteileanzahl auch die Fertigungskosten und den mit einer höheren Teilzahl verbundenen Handling- und Fügeaufwand reduziert. Zudem ist die Platte als massives Metallbauteil von einer geringen Fertigungstiefe, wodurch ein gutes Verhältnis von Kosten zu Gewicht entsteht. Ein weiterer Vorteil des erfindungsgemäßen Aufbaus ist, dass hohe Traglasten möglich sind, da ein direkter Kraftfluss vorliegt, ohne das Kraft umgeleitet und Fügeverbindungen beansprucht werden müssen. Hinzu kommt, dass der vorgestellte Lastrahmen eine gute Zugänglichkeit bietet, wodurch auch Wartungs- und Servicearbeiten erleichtert werden.

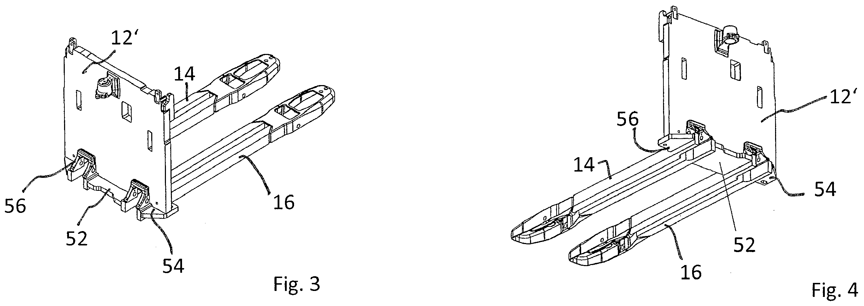

Fign. 3 und 4 zeigen eine Ausgestaltung des Lastrahmens, der für ein Anheben von größeren Lasten, wie beispielsweise bei einem Doppelstockhub vorgesehen ist. Zu erkennen ist bereits, dass die Platte 12' eine größere Dicke als Platte 12 besitzt. Abgesehen von der Platte 12' werden weitere Bauteile in diesem Ausführungsbeispiel mit den gleichen Bezugszeichen belegt, wie bei dem ersten Ausführungsbeispiel, selbst wenn sie anders dimensioniert oder wie im Bereich der freien Enden der Radarme 14, 16 eine andere Ausgestaltung besitzen.

Der Lastrahmen aus dem Ausführungsbeispiel in den Fign. 3 und 4 besitzt Versteifungsplatten 52, 54, 56, die T-förmig mit einer Stoßnaht an der Platte 12' anliegen. Wie beispielsweise auch in Fig. 4 zu erkennen, erstecken sich die Versteifungsplatten auf beiden Seiten der Platte 12' und bieten in Richtung der Radarme 14, 16 eine ausreichend lange Kante zur Verbindung mit Seitenwänden der Radarme 14, 16. Die Verbindung der Radarme erfolgt hierbei an drei Seiten. Jeder Radarm besitzt ein U-förmiges Profil, wobei die Lagerböcke 44, 46 an dem Schenkel des U-Profils angreifen, der den Grund bildet. Zudem kann die Platte 12' auch mit diesem Schenkel des Radarms verbunden sein. Ist eine Ausnehmung in der Platte 12' zur Anbindung der Radarme 14, 16 vorgesehen, so kann diese Verbindung sich auch auf die Seitenschenkel der Radarme erstrecken. Die Seitenschenkel der Radarme werden zudem über die Versteifungsplatten 52, 54, 56 angebunden. Die Versteifungsplatten sind zudem mit der Platte 12' verbunden. Durch die zusätzlichen Versteifungsplatten kann eine ausreichend feste Verbindung der Radarme erzielt werden, die auch stabil genug ist, um größere Lasten zu heben.

### Bezugszeichenliste

- 10: Lastrahmen
- 12: Platte
- 12': Platte
- 14: Radarm
- 16: Radarm
- 18: Ausnehmung
- 20: Ausnehmung
- 22: Ausnehmung
- 24: Ausnehmung
- 26: Lagerkopf
- 28: Grundkörper
- 30: Lageraufnahme
- 32: Lastrolle
- 34: Lastrolle
- 36: Druck-/Zugstange
- 38: Druck-/Zugstange
- 40: Dreipunkthebel
- 42: Dreipunkthebel
- 44: Lagerbock
- 46: Lagerbock
- 48: Abschnitt
- 50: Abschnitt
- 52: Versteifungsplatte
- 54: Versteifungsplatte
- 56: Versteifungsplatte

## Patentansprüche

1. Flurförderzeug, insbesondere Niederhub- oder Doppelstockfahrzeug, das ein Antriebsteil mit einem Antriebsrahmen und ein Lastteil mit einem Hubgestell aufweist, das einen Lastrahmen (10) mit einem Lasttragmittel und mindestens einem Lagerkopf (26) für einen Hubzylinder aufweist, **dadurch gekennzeichnet, dass** der Lastrahmen (10) eine Platte (12, 12') aufweist, an der der mindestens eine Lagerkopf (26) und das Lasttragmittel angebracht sind.

2. Flurförderzeug nach Anspruch 1, **dadurch gekennzeichnet, dass** eine Batterie für das Fahrzeug in dem Antriebsteil vorgesehen ist.

3. Flurförderzeug nach Anspruch 2, **dadurch gekennzeichnet, dass** die Batterie fest in das Antriebsteil eingebaut ist.

4. Flurförderzeug nach einem der Ansprüche 1 bis 3, **dadurch gekennzeichnet, dass** die Lasttragmittel ein Paar von Radarmen (14, 16) aufweisen, von denen jeder an seinem freien Ende eine über eine Druck-/Zugstange (36, 38) stellbare Lastrolle (32, 34) für den Initialhub aufweist.

5. Flurförderzeug nach Anspruch 4, **dadurch gekennzeichnet, dass** für jeden der Radarme (14, 16) an der Platte (12, 12') ein Lagerbock (44, 46) vorgesehen ist, der den Radarm (14, 16) und einen Umlenkhebel für die Druck-/Zugstange (36, 38) der Lastgabel lagert.

6. Flurförderzeug nach einem der Ansprüche 1 bis 5, **dadurch gekennzeichnet, dass** zwischen den Lagerböcken (44, 46) mindestens eine Aussteifungsplatte (52, 54, 56) vorgesehen ist, über die Lagerböcke (44, 46) und Platte (12, 12') und miteinander verbunden sind.

7. Flurförderzeug nach Anspruch 6, **dadurch gekennzeichnet, dass** das zwischen Platte (12, 12') und Aussteifungsplatte (52, 54, 56) eine Stoßnaht vorliegt.

8. Flurförderzeug nach Anspruch 6 oder 7, **dadurch gekennzeichnet, dass** die Aussteifungsplatte (52, 54, 56) mit beiden Radarmen (14, 16) verbunden ist.

9. Flurförderzeug nach einem der Ansprüche 1 bis 8, **dadurch gekennzeichnet, dass** der Lagerkopf (26) für den Hubzylinder eine quadratische Grundplatte (28) aufweist, die flächig mit der Platte (12, 12') des Lastrahmens (10) verbunden ist.

10. Flurförderzeug nach einem der Ansprüche 1 bis 9, **dadurch gekennzeichnet, dass** der Lagerkopf (26) eine Aufnahme für den Hubzylinder aufweist.

11. Flurförderzeug nach einem der Ansprüche 1 bis 10, **dadurch gekennzeichnet, dass** der Lastrahmen (10) für ein Niederhubfahrzeug ausgebildet ist und eine Plattenstärke von 15 bis 45 mm, bevorzugt von 20 bis 30 mm aufweist.

12. Flurförderzeug nach einem der Ansprüche 1 bis 10, **dadurch gekennzeichnet, dass** der Lastrahmen (10) für ein Doppelstockfahrzeug ausgebildet ist und eine Plattenstärke von 20 bis 70 mm, bevorzugt von 30 bis 50 mm aufweist.

13. Flurförderzeug nach einem der Ansprüche 1 bis 12, **dadurch gekennzeichnet, dass** in einem Bereich zwischen Lagerkopf und Lasttragmittel kein zusätzliches Verstärkungs- oder Aussteifungsteil angeordnet ist.

14. Flurförderzeug nach einem der Ansprüche 1 bis 13, **dadurch gekennzeichnet, dass** an der Platte kein zusätzliches Verstärkungs- oder Aussteifungsteil angeordnet ist.

15. Flurförderzeug nach einem der Ansprüche 1 bis 14, **dadurch gekennzeichnet, dass** der mindestens eine Lagerkopf als Widerlager für einen Hubzylinder ausgebildet ist.
